(19) Europäisches Patentamt
European Patent Office
Office européen des brevets

(11) **EP 1 679 493 B1**

(12) **EUROPÄISCHE PATENTSCHRIFT**

(45) Veröffentlichungstag und Bekanntmachung des Hinweises auf die Patenterteilung:
**23.05.2007  Patentblatt 2007/21**

(51) Int Cl.:
***G01D 5/244*** *(2006.01)*          ***G01D 18/00*** *(2006.01)*
***G01D 5/16*** *(2006.01)*

(21) Anmeldenummer: **06000161.7**

(22) Anmeldetag: **05.01.2006**

(54) **Verfahren zum Korrigieren einer aus Messwerten abgeleiteten Kennlinie eines magnetoresistiv ausgelegten Weg- oder Winkelsensors**

Method for correcting a measurement derived characteristic of a magnetoresistive position or angle sensor

Procédé destiné à la correction d'une courbe caractéristique issue de valeurs de mesure d'un capteur de trajectoire ou d'angle conçu pour être magnétorésistant

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.01.2005  DE 102005001077**

(43) Veröffentlichungstag der Anmeldung:
**12.07.2006  Patentblatt 2006/28**

(73) Patentinhaber: **Leopold Kostal GmbH & Co. KG**
**58507 Lüdenscheid (DE)**

(72) Erfinder:
• **Maier, Oliver**
  **57439 Attendorn (DE)**
• **Bläsing, Frank**
  **59457 Werl (DE)**
• **Schirp, Christian**
  **44269 Dortmund (DE)**

(74) Vertreter: **Kerkmann, Detlef**
**Leopold Kostal GmbH & Co.KG,**
**Wiesenstrasse 47**
**58507 Lüdenscheid (DE)**

(56) Entgegenhaltungen:
**DE-A1- 10 148 918          DE-A1- 19 947 761**
**DE-A1- 19 962 241          DE-C1- 19 747 753**
**US-B1- 6 487 787**

EP 1 679 493 B1

**Beschreibung**

Die Erfindung betrifft ein Verfahren zum Korrigieren einer aus Messwerten abgeleiteten Kennlinie für einen vorgegebenen Messbereich eines magnetoresistiv ausgelegten Weg- oder Winkelsensors, umfassend ein magnetoresistives Sensorelement und einen relativ zu diesem bewegbaren, eine sich mehrfach wiederholende, wechselnde magnetische Polarisierung aufweisenden und von dem Sensorelement des Sensors bezüglich seiner Magnetisierung abgetasteten Maßstab.

Weg- oder Winkelsensoren mit magnetoresistiven Sensorelementen werden als Teil eines Drehmomentsensors beispielsweise im Lenkrad eines Kraftfahrzeuges eingesetzt, um die von einem Fahrer auf das Lenkrad ausgeübte Lenkkraft zu ermitteln. Ein solcher Drehmomentsensor umfasst eine innere, mit der Lenkspindel drehmomentschlüssig verbundene Nabe, die über Biegespeichen mit einem äußeren Kranz verbunden ist. Aufgrund der Biegespeichen ist der äußere Kranz relativ zu der Nabe rotatorisch um einen bestimmten Drehwinkelbetrag verstellbar. Zum Begrenzen des Verstellbetrages trägt die Nabe nach außen abragende Begrenzungsspeichen, die in entsprechende Ausnehmungen des äußeren Kranzes eingreifen, so dass die Verstellweite des äußeren Kranzes gegenüber der Nabe durch den Freiraum bestimmt wird, der sich zwischen der Anschlagspeiche und der in dem äußeren Kranz befindlichen Öffnung befindet. Zum Erfassen des angelegten Drehmomentes verfügt ein solcher Drehmomentsensor typischerweise über ein oder mehrere Wegsensoren. Diese umfassen ein magnetoresistives Sensorelement sowie einen magnetischen Maßstab mit einer sich über seine Länge mehrfach wiederholenden wechselnden magnetischen Polarisierung. Beide Elemente - das Sensorelement und der Maßstab - sind relativ zueinander bewegbar, weshalb eines der beiden Elemente der Nabe und das andere Element dem Kranz eines solchen Drehmomentsensors zugeordnet ist.

Man ist bestrebt, mit derartigen Drehmomentsensoren eine möglichst hohe Auflösung und eine dementsprechend hohe Messgenauigkeit zu erreichen, damit der Drehmomentsensor mit einem möglichst geringen Versatz zwischen der Nabe und dem äußeren Kranz arbeitend ausgelegt werden kann. Aus diesem Grunde ist man bemüht, die Periode der Aufmagnetisierung möglichst in die Größenordnung des maximalen Versatzes zwischen der Nabe und dem Kranz des Drehmomentsensors zu bringen, damit auch kleine Versätze zwischen den beiden Elementen des Drehmomentsensors aufgelöst werden können. Eine Auswertung des oder der Wegsensoren des Drehmomentsensors erfolgt über den Arcustangens, um auf diese Weise den Phasenwinkel der durch die Sinus-/KosinusSignale beschriebenen Kreisfunktion zu erhalten, der sich innerhalb einer Periode direkt proportional zum Versatz zwischen dem Sensorelement und dem Magnetmaßstab verhält. Somit stellt der Arcustangens eine Kennlinie innerhalb des Messbereiches dar. Limitierender Faktor der Wahl des periodischen Wechsels ist jedoch, dass die aus dem Messsignal abgeleitete Kennlinie innerhalb des Messbereiches keine Sprungstelle aufweisen darf. Um eine solche Anordnung zwischen dem Sensorelement und dem Magnetmaßstab vorsehen zu können, müssen beide Elemente mit hoher Genauigkeit zueinander justiert werden, damit die Kennlinie innerhalb des Messbereiches keine Sprungstelle aufweist. Eine Sprungstelle stellt einen nicht definierten und daher nicht auswertbaren Messwert dar. Zu berücksichtigen sind ferner bei der Periodizität der wechselnden Magnetisierung des Maßstabes die einzuhaltenden Toleranzen hinsichtlich einer Anordnung der beiden Elemente zueinander bei ihrer Montage. Daher ist das Auflösungsvermögen vorbekannter Drehmomentsensoren unter Verwendung magnetoresistiver Sensorelemente und einem entsprechenden als Magnetlineal ausgestalteten Maßstab begrenzt.

Der Erfindung liegt daher die Aufgabe zugrunde, ein Verfahren bereitzustellen, mit dem nicht nur das Auflösungsvermögen eines magnetoresistiven Weg- oder Winkelsensors besonders hoch ist, sondern welches zudem eine hochgenaue Justage zwischen dem Sensorelement und seinem Magnetmaßstab nicht notwendig macht.

Diese Aufgabe wird erfindungsgemäß durch das gattungsgemäße Verfahren der eingangs genannten Art gelöst, bei dem in einem ersten Schritt geprüft wird, ob die Kennlinie innerhalb des Messbereichs eine Sprungstelle aufweist, indem ein gemessener erster Phasenwinkel am ersten Ende des Messbereichs mit einem gemessenen zweiten Phasenwinkel am zweiten Ende des Messbereichs verglichen wird, und das Vorhandensein einer Sprungstelle in dem Messbereich festgestellt wird, wenn der zweite Phasenwinkel einen mit dem vom ersten Phasenwinkel in Richtung zum zweiten Phasenwinkel allgemein vorherrschenden Kennlinienverlauf nicht zu vereinbarenden Wert einnimmt, und bei Detektion einer Sprungstelle in einem zweiten Schritt eine zwischen den beiden Phasenwinkeln liegende Phasenwinkelentscheidungsschwelle definiert wird, um dann bei einer Betätigung des Sensors diejenigen nachfolgend gemessenen Phasenwinkel, die unterhalb der Phasenwinkelentscheidungsschwelle liegen um das Maß der Sprunghöhe der Sprungstelle zu korrigieren.

Bei diesem Verfahren ist eine Phasenwinkelkorrektur - also eine Korrektur des Arcustangens - ohne weiteres möglich für den Fall, dass detektiert werden sollte, dass innerhalb des Messbereiches eine Sprungstelle vorhanden ist. Zunächst erfolgt bei diesem Verfahren jedoch eine Überprüfung dahingehend, ob innerhalb des Messbereiches überhaupt eine Sprungstelle vorhanden ist. Ist innerhalb des Messbereiches keine Sprungstelle vorhanden, braucht das Korrekturverfahren nicht angewandt zu werden. Zum Feststellen, ob innerhalb des Messbereiches eine Sprungstelle vorhanden ist, werden die beiden, an jeweils einem Ende des Messbereiches befindlichen Phasenwinkel miteinander verglichen.

Wenn der an dem zweiten Ende des Messbereiches gemessene Phasenwinkel einen mit dem allgemeinen Kennlinienverlaufes nicht vereinbaren Wert einnimmt, befindet sich innerhalb des Messbereichs eine Sprungstelle. Ist der allgemeine Kennlinienverlauf beispielsweise ansteigend, liegt somit eine Sprungstelle innerhalb des Messbereichs vor, wenn der am zweiten Ende des Messbereichs ermittelte Phasenwinkel kleiner ist als an dem ersten Ende des Messbereiches. Umgekehrtes gilt für einen allgemein abfallenden Kennlinienverlauf. Zur Korrektur wird vorgeschlagen, dass bei einer Detektion einer solchen Sprungstelle zunächst eine Phasenwinkelentscheidungsschwelle definiert wird. Diese liegt bezüglich ihres Betrages zwischen den beiden an den jeweiligen Enden des Messbereichs befindlichen Phasenwinkeln. In einem Beispiel ist vorgesehen, den Mittelwert der vorgenannten beiden Phasenwinkel zur Definition der Phasenwinkelentscheidungsschwelle zu verwenden. Die Phasenwinkelentscheidungsschwelle definiert in einem Phasenwinkeldiagramm ein bestimmtes Niveau und dient als Entscheidungsschwelle dahingehend, ob ein gemessener Phasenwinkel zu korrigieren ist oder nicht. Befindet sich bei einer Betätigung des Wegsensors ein gemessener Phasenwinkel unterhalb der Phasenwinkelentscheidungsschwelle, dann wird dieser um das Maß der Sprunghöhe (=2δ) der Sprungstelle korrigiert. Aus dem im Bereich der früheren Sprungstelle nicht definierten Phasenwinkelwert ist sodann ein definierter Wert geworden.

Ist eine Absolutmessung vorgesehen, ist es notwendig, die Kennlinie, beispielsweise die Sprungstellen korrigierte Kennlinie dahingehend weiter zu korrigieren, dass eine definierte Position zwischen den beiden relativ zueinander bewegbaren Elementen in der Kennlinie einen definierten Wert aufweist. Bei Einsatz eines solchen Wegsensors im Rahmen eines Drehmomentsensors eines Lenkrades eines Kraftfahrzeuges wird man diese vordefinierte Position mit der Nullstellung der beiden bewegbaren Elemente gegeneinander definieren, die mittig innerhalb des Messbereiches angeordnet ist. Folglich wird man bei einer solchen Anwendung des Wegsensors die Kennlinie bezüglich ihres Niveaus dergestalt korrigieren, dass der Nullstellung der beiden relativ zueinander bewegten Elemente zueinander der Nulldurchgang der Kennlinie zugeordnet ist. Diese Korrektur lässt sich mittels des in der Nullstellung der beiden relativ zueinander bewegten Elemente ermittelten Phasenwinkels durchführen, wobei der ermittelte Phasenwinkel die Korrekturgröße darstellt. Ermitteln lässt sich diese weitere Korrekturgröße auch numerisch.

Zumeist wird man bei einer Initialisierung des Wegsensors die Phasenwinkelentscheidungsschwelle definieren, die sodann in einem abrufbaren Speicher hinterlegt wird. Für die nachfolgenden Messungen erfolgt dann jeweils ein Vergleich mit der hinterlegten Phasenwinkelentscheidungsschwelle dahingehend, ob der erfasste Phasenwinkel zu korrigieren ist oder nicht. Das Korrekturverfahren ist somit wenig rechenintensiv und eignet sich daher vor allem für Automotive-Anwendungen.

Um den eigentlich vorgesehenen Messbereich um einen Überlastbereich zu erweitern, wird man diesen zweckmäßigerweise so vorsehen, dass der Polaritätswechsel des Maßstabes und das Sensorelement dergestalt aufeinander abgestimmt sind, dass der Messbereich kleiner ist als der Abstand zweier Sprungstellen der Kennlinie voneinander, zweckmäßigerweise etwa 10 - 20% kleiner, je nachdem, wie weit der Überlastbereich ausgelegt sein soll.

Die Erfindung ist nachfolgend anhand eines Ausführungsbeispiels unter Bezugnahme auf die beigefügten Figuren beschrieben. Es zeigen:

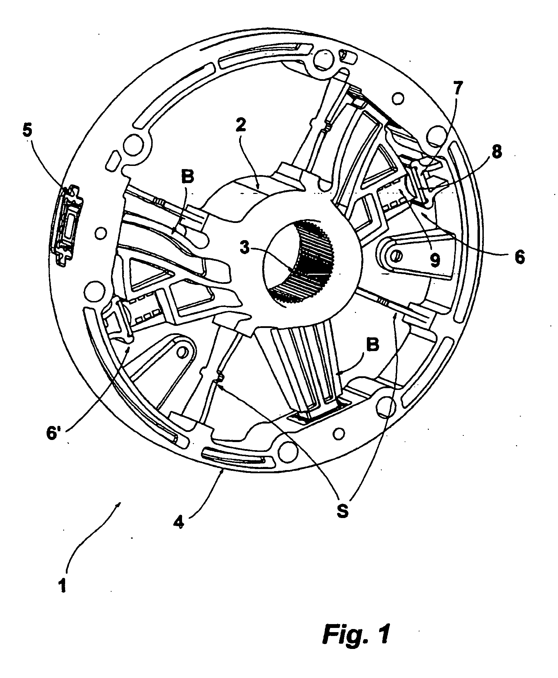

**Fig. 1:** ein Drehmomentsensor für ein Lenkrad eines Kraftfahrzeuges mit zwei Wegsensoren,

**Fig. 2:** zwei Diagramme darstellend den gemessenen Phasenwinkel (Diagramm oben) und den korrigieren Phasenwinkel (Diagramm unten) und

**Fig. 3:** weitere Diagramme darstellend den gemessenen Phasenwinkel (Diagramm oben), den korrigierten Phasenwinkel (Diagramm mitte) sowie den um einen Nullstellenabgleich korrigierten Phasenwinkel (Diagramm unten).

Ein Drehmomentsensor 1 für ein Lenkrad eines Kraftfahrzeuges umfasst eine innere Nabe 2 mit einer Innenverzahnung 3 zum drehmomentschlüssigen Verbinden des Drehmomentsensors 1 mit der Lenkspindel eines Kraftfahrzeuges. Konzentrisch zur Nabe 2 ist ein Kranz 4 angeordnet, der mit der Nabe 2 durch mehrere Biegespeichen S verbunden ist. Die Biegespeichen S gestatten, dass der Kranz 4 gegenüber der Nabe 2 um bestimmte Drehwinkel verstellt werden kann. Die Nabe 2 trägt ferner mehrere radial zu dem Kranz 4 hin abragende Begrenzungsspeichen B, die in jeweils eine Begrenzungsausnehmung 5 des Kranzes 4 eingreifen. Die lichte Weite der Begrenzungsausnehmungen 5 in Drehrichtung des Kranzes 4 gegenüber der Nabe 2 definiert sich durch die gewünschte Verdrehbarkeit der beiden Elemente gegeneinander. Bei dem dargestellten Ausführungsbeispiel beträgt der Spalt in beide Richtungen etwa 500 μm.

Der Drehmomentsensor 1 verfügt des Weiteren über zwei Wegsensoren 6, 6' zum Erfassen eines Versatzes zwischen der Nabe 2 und dem Kranz 4. Im Folgenden ist der Wegsensor 6 beschrieben. Der Wegsensor 6' ist identisch aufgebaut. Der Wegsensor 6 umfasst ein in einer Fassung 7 gehaltenes Magnetlineal 8 als Maßstab. Das Magnetlineal 8 verfügt über eine in kurzem Abstand periodisch wechselnde Polarität. Die Fassung 7 mit dem Magnetlineal 8 ist an der Innenseite des Kranzes 4 angeordnet. Als Teil der Nabe 2 wirkt zum Erfassen eines Drehmomentes ein magnetoresistives Sensorelement 9 mit dem Magnetlineal 8 zusammen. Das Sensorelement 9 umfasst zwei, mit einem Phasenversatz von 90° zueinander angeordnete Wandler zum Aufnehmen des Sinus-/Kosinussignals. Das Sensorelement 9 ist in geringem Abstand zu der periodisch magnetisierten Oberfläche des Magnetlineals 8 angeordnet. Eine relative Drehbewegung zwischen dem Kranz 4 und der Nabe 2 wird somit als Versatz zwischen dem Magnetlineal 8 und dem Sensorelement 9 erfasst. Die Periodizität der auf dem Magnetlineal 8 aufgebrachten wechselnden Magnetisierung und das Sensorelement sind bei diesen Ausführungsbeispiel dergestalt aufeinander abgestimmt, dass der vorbestimmte Messbereich etwa 10 - 15% kleiner ist als die Polteilung, so dass innerhalb des vordefinierten Messbereiches maximal eine einzige Sprungstelle innerhalb der berechneten Kennlinie vorhanden sein kann.

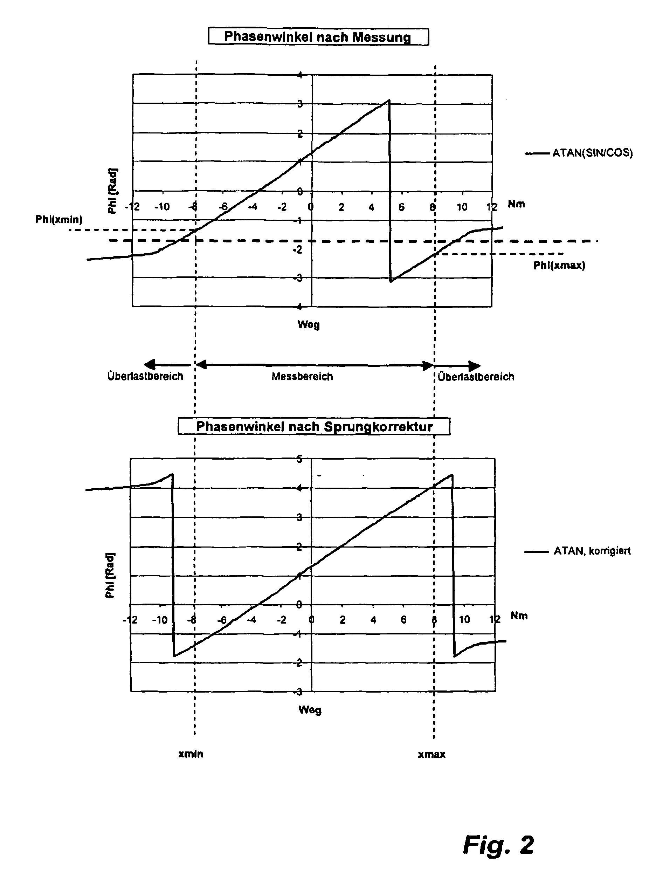

Bei einer Initialisierung der Wegsensoren 6, 6' erfolgt in einem ersten Schritt eine Überprüfung, ob innerhalb des jeweiligen Messbereiches überhaupt eine Sprungstelle vorhanden ist. Ausgewertet wird von den Wegsensoren 6, 6' der jeweilige, sich aus dem Arcustangens ergebende Phasenwinkel. Eine Auswertung über den Arcustangens ergibt den Phasenwinkel der durch die Sinus-/Kosinussignale beschriebenen Kreisfunktion, der sich innerhalb einer Periode direkt proportional zum Versatz zwischen dem Sensormagnetlineal und dem Sensorelement verhält. Zum Ermitteln, ob innerhalb des Messbereichs in der ermittelten Kennlinie eines Wegsensors eine Sprungstelle vorhanden ist, wird ein Vergleich zwischen dem Phasenwinkel Phi(xmin) am linken Ende des Messbereiches mit dem gemessenen Phasenwinkel Phi(xmax) am rechten Ende des Messbereiches durchgeführt. Der allgemeine Kennlinienverlauf des dargestellten Ausführungsbeispieles ist ansteigend. Ist der gemessene Phasenwinkel Phi(xmax) kleiner als der am linken Ende des Messbereichs erfasste Wert Phi(xmin), weist die Kennlinie innerhalb des definierten Messbereiches eine Sprungstelle auf. Anderenfalls befindet sich innerhalb des definierten Messbereiches der ermittelten Kennlinie keine Sprungstelle, so dass eine Korrektur der gemessenen Phasenwinkel nicht notwendig ist. Zur Definition einer Phasenwinkelentscheidungsschwelle anhand der festgestellt werden soll, ob ein gemessener Phasenwinkel zu korrigieren ist oder nicht, wird bei dem dargestellten Ausführungsbeispiel der Mittelwert, der an den jeweiligen Enden des Messbereiches erfassten Phasenwinkel Phi(xmin), Phi(xmax) gebildet. Die Phasenwinkelentscheidungsschwelle ist in dem in Figur 2 oben gezeigten Diagramm mit PWES bezeichnet. Durch die Phasenwinkelentscheidungsschwelle PWES wird festgelegt, welche erfassten Phasenwinkel zu korrigieren sind und welche nicht. Bei einer Messung von Phasenwinkeln, die unter der Phasenwinkelentscheidungsschwelle PWES liegen, werden diese korrigiert und zwar um den Wert 2$\check{\partial}$, der der Sprunghöhe der Sprungstelle entspricht. Die diesbezüglich korrigierte Phasenwinkelkurve ist in Figur 2 in dem unteren Diagramm wiedergegeben.

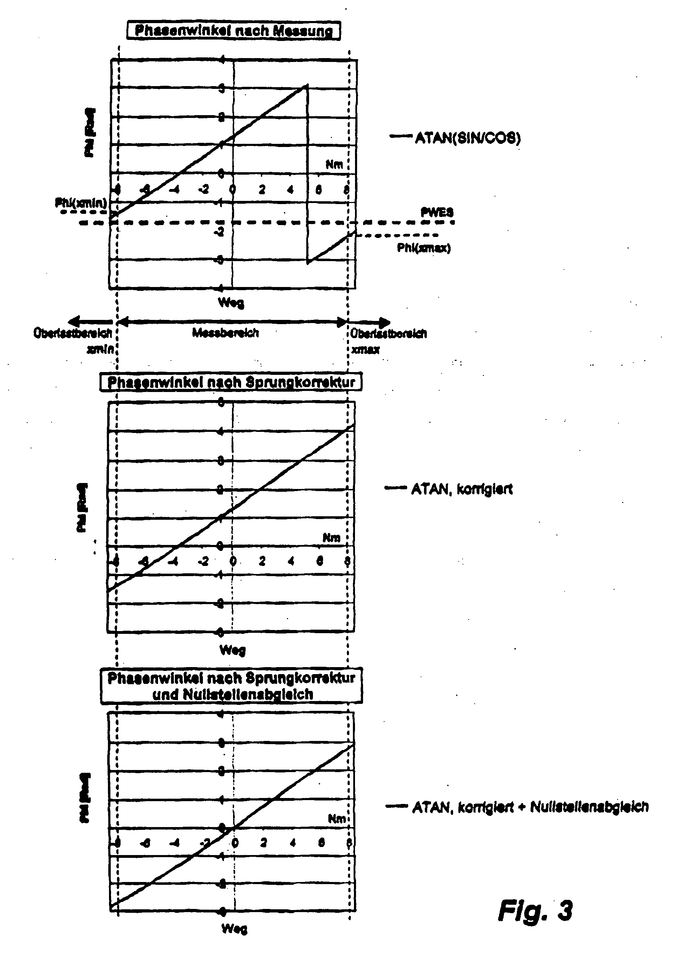

Die in Figur 3 gezeigten Diagramme zeigen nochmals die Schritte der zuvor vorgenommenen Sprungstellenkorrektur (die beiden oberen Diagramme), die hinsichtlich des dargestellten Kennlinienausschnittes im wesentlichen auf den Messbereich begrenzt sind. Das in Figur 3 gezeigte oberste Diagramm entspricht der Kennlinie, ermittelt aus den Messwerten. Das mittlere Diagramm zeigt die Sprungstellen korrigierte Kennlinie. Da mit dem Drehmomentsensor 1 eine Absolutmessung vorgenommen werden soll, wird bei dem Ausführungsbeispiel gemäß Figur 3 zusätzlich ein Nullstellenabgleich vorgenommen. Dieses erfolgt bei dem dargestellten Ausführungsbeispiel auf numerische Art und Weise. Die Größe des Nullstellenabgleiches lässt sich unter der Voraussetzung, dass innerhalb des Messbereiches zuvor eine Sprungstelle innerhalb der Kennlinie detektiert worden ist, wie folgt berechnen, wobei der Nullstellenabgleich darin mit Offset bezeichnet ist:

$$\text{Offset} = \check{\partial} + \frac{Phi(x\min) + Phi(x\max)}{2}$$

Mit der ermittelten Größe wird anschließend jeder Phasenwinkel korrigiert, um daraus eine absolute Weginformation zwischen dem Magnetlineal 8 und dem Sensorelement 9 zu erhalten.

Für den Fall, dass die Kennlinie innerhalb des Messbereiches keine Sprungstelle aufweist, wird ein numerischer Nullstellenabgleich gemäß folgender Formel durchgeführt:

$$\text{Offset} = \frac{Phi(x\min) + Phi(x\max)}{2}$$

Aus den obigen Formeln wird deutlich, dass der darin enthaltene Term die bei der Sprungkorrektur verwendete Phasenwinkelentscheidungsschwelle PWES ist. Somit wird die bei der vorangegangenen Sprungkorrektur ermittelte Größe - für den Fall, dass die Kennlinie innerhalb des Messbereiches eine Sprungstelle aufweist - ebenfalls für den Nullstellenabgleich verwendet.

Der Messbereich und die Länge einer Phase sind bei dem dargestellten Ausführungsbeispiel dergestalt aufeinander abgestimmt, dass an beiden Endbereichen des Messbereiches ein zusätzlicher Überlastbereich definiert ist. Dieses dient dem Zweck, dass der eigentliche definierte Messbereich nicht mit einem Anschlag endet und auf diese Weise eine Überlastsituation eindeutiger detektiert werden kann.

**Bezugszeichenliste**

| | |
|---|---|
| 1 | Drehmomentsensor |
| 2 | Nabe |
| 3 | Innenverzahnung |
| 4 | Kranz |
| 5 | Begrenzungsausnehmung |
| 6, 6' | Wegsensor |
| 7 | Fassung |
| 8 | Magnetlineal |
| 9 | Sensorelement |
| | |
| B | Begrenzungsspeiche |
| PWES | Phasenwinkelentscheidungsschwelle |
| Phi(xmin) | Phasenwinkel |
| Phi(xmax) | Phasenwinkel |
| S | Biegespeiche |

**Patentansprüche**

1. Verfahren zum Korrigieren einer aus Messwerten abgeleiteten Kennlinie für einen vorgegebenen Messbereich eines magnetoresistiv ausgelegten Weg- oder Winkelsensors (6, 6'), umfassend ein magnetoresistives Sensorelement (9) und einen relativ zu diesem bewegbaren, eine sich mehrfach wiederholende, wechselnde magnetische Polarisierung aufweisenden und von dem Sensorelement (9) des Sensors (6, 6') bezüglich seiner Magnetisierung abgetasteten Maßstab (8), **dadurch gekennzeichnet, dass** in einem ersten Schritt geprüft wird, ob die Kennlinie innerhalb des Messbereichs eine Sprungstelle aufweist, indem ein gemessener erster Phasenwinkel (Phi(xmin)) am ersten Ende des Messbereichs mit einem gemessenen zweiten Phasenwinkel (Phi(xmax)) am zweiten Ende des Messbereichs verglichen wird, und das Vorhandensein einer Sprungstelle in dem Messbereich festgestellt wird, wenn der zweite Phasenwinkel (Phi(xmax)) einen mit dem vom ersten Phasenwinkel (Phi(xmin)) in Richtung zum zweiten Phasenwinkel (Phi(xmax)) allgemein vorherrschenden Kennlinienverlauf nicht zu vereinbarenden Wert einnimmt, und bei Detektion einer Sprungstelle in einem zweiten Schritt eine zwischen den beiden Phasenwinkeln (Phi(xmin)), Phi(xmax)) liegende Phasenwinkelentscheidungsschwelle (PWES) definiert wird, um dann bei einer Betätigung des Sensors (6, 6') diejenigen nachfolgend gemessenen Phasenwinkel, die unterhalb der Phasenwinkelentscheidungsschwelle (PWES) liegen um das Maß der Sprunghöhe der Sprungstelle zu korrigieren.

2. Verfahren nach Anspruch 1, **dadurch gekennzeichnet, dass** die Korrektur der unterhalb der Phasenwinkelentscheidungsschwelle (PWES) liegenden Messwerte durch Addition des Maßes der Sprunghöhe erfolgt.

3. Verfahren nach Anspruch 1 oder 2, **dadurch gekennzeichnet, dass** die Periodenlänge der Magnetisierung des Maßstabes (8) und das Sensorelement (9) dergestalt aufeinander abgestimmt sind, dass der Messbereich kleiner ist als der Abstand zweier Sprungstellen der Kennlinie voneinander.

4. Verfahren nach Anspruch 3, **dadurch gekennzeichnet, dass** der Polaritätswechsel des Maßstabes (8) und das Sensorelement (9) dergestalt aufeinander abgestimmt sind, dass der Messbereich 10 - 20%, insbesondere 10 - 15% kleiner ist als der Abstand zweier Sprungstellen der Kennlinie zueinander.

5. Verfahren nach einem der Ansprüche 1 bis 3, **dadurch gekennzeichnet, dass** ein Nullstellenabgleich der ermittelten Kennlinie durchgeführt wird.

6. Verfahren nach Anspruch 5, **dadurch gekennzeichnet, dass** ein Nullstellenabgleich numerisch unter Verwendung der zuvor definierten Phasenwinkelentscheidungsschwelle (PWES) erfolgt, wobei die Größe des Nullstellenabgleiches bei Vorhandensein einer Sprungstelle in der Kennlinie innerhalb des Messbereiches durch den Wert PWES + $\delta$ und bei einer Kennlinie ohne Sprungstelle innerhalb des Messbereiches durch die Phasenwinkelentscheidungsschwelle (PWES) definiert wird.

**Claims**

1. Process for correcting a characteristic curve derived from measured values for a prescribed measuring range of a displacement sensors or angle sensor (6, 6') of magneto-resistive design comprising a magneto-resistive sensor element (9) and a measuring gauge (8) which is moveable in relation to the same and features a repetitive, reversing magnetic polarisation and which is scanned by the sensor element (9) of the sensor (6, 6') in respect of its magnetisation **characterised by** the fact that it is examined in an initial step whether the characteristic curve shows a jump discontinuity point within the measuring range by comparing a measured first phase angle (Phi(xmin)) at the first end of the measuring range with a measured second phase angle (Phi(xmax)) at the second end of the measuring range and the existence of a jump discontinuity point in the measuring range is determined if the second phase angle (Phi(xmax)) takes up a value which is not consistent with the generally prevalent characteristic curve of the first phase angle (Phi(xmin)) in the direction of the second phase angle (Phi(xmax)), and having detected a jump discontinuity point, a phase angle decision threshold (PWES) lying between the two phase angles (Phi(xmin)), Phi(xmax)) is defined in a second step in order to then correct those subsequently measured phase angles that lie below the phase angle decision threshold (PWES) by the magnitude of the jump height of the jump discontinuity point when the sensor (6, 6') is actuated.

2. Process in accordance with Claim 1, **characterised by** the fact that the correction of the measured values lying below the phase angle decision threshold (PWES) is conducted by the addition of the magnitude of the jump height.

3. Process in accordance with Claim 1 or Claim 2, **characterised by** the fact that the period lengths for the magnetisation of the measuring gauge (8) and the sensor element (9) are coordinated to each other in such a manner that the measuring range is smaller than the distance of two jump discontinuity points of the characteristic curve from each other.

4. Process in accordance with Claim 3, **characterised by** the fact that the polarity reversals of the gauge (8) and the sensor element (9) are coordinated to each other in such a manner that the measuring range 10 - 20%, in particular 10 - 15%, is smaller than the distance of two jump discontinuity points of the characteristic curve from each other.

5. Process in accordance with any of Claims 1 to 3, **characterised by** the fact that a zero offset adjustment is conducted of the ascertained characteristic curve.

6. Process in accordance with Claim 5, **characterised by** the fact that a zero offset adjustment is effected utilising the previously defined phase angle decision threshold (PWES) wherein the magnitude of the zero offset adjustment is defined by the value PWES + δ in the case of there being a jump discontinuity point in the characteristic curve within the measuring range, and by the phase angle decision threshold (PWES) in the case of a characteristic curve without any jump discontinuity point within the measuring range.

**Revendications**

1. Procédé pour corriger une courbe caractéristique dérivée de données de mesure pour une plage mesure prédéterminée d'un détecteur de trajectoire ou d'angle magnétorésistif (6, 6') qui comprend un élément de détection magnétorésistif (9) et un organe de mesure (8) mobile par rapport à celui-ci qui présente une polarisation magnétique changeante, plusieurs fois de manière répétée et est balayé par l'élément de détection (9) du détecteur (6, 6') quant à sa magnétisation, **caractérisé en ce que**, lors d'une première étape, il est vérifié si la courbe caractéristique présente, dans la plage de mesure, une discontinuité **en ce qu'**un premier angle de phase (Phi(xmin) mesuré à la première extrémité de la plage de mesure est comparé avec un deuxième angle de phase (Phi(xmax) mesuré à la deuxième extrémité de la plage de mesure, et que l'existence d'une discontinuité est constatée dans la plage de mesure quand le deuxième angle de phase (Phi(xmax) prend une valeur incompatible avec l'évolution générale prédominante de la courbe caractéristique du premier angle de phase (Phi(xmin) en direction du deuxième angle de phase (Phi(xmax), et que, lors de la détection d'une discontinuité, un seuil décisif d'angle de phase (PWES) situé entre les deux angles de phase (Phi(xmin), Phi(xmax) est défini au cours d'une deuxième étape, pour corriger de la mesure de la hauteur de la discontinuité, lors d'un actionnement du détecteur (6, 6'), les angles de phase mesurés ensuite qui sont situés au-dessous du seuil décisif d'angle de phase (PWES).

2. Procédé selon la revendication 1, **caractérisé en ce que** la correction des valeurs mesurées, situées au-dessous du seuil décisif d'angle de phase (PWES) est effectuée par addition de la hauteur de la discontinuité.

3. Procédé selon revendication 1 ou 2, **caractérisé en ce que** la longueur de période de la magnétisation de l'organe de mesure (8) et celle de l'élément de détection (9) sont adaptées l'une à l'autre de sorte que la plage de mesure soit plus petite que l'intervalle entre deux discontinuités de la courbe caractéristique.

4. Procédé selon la revendication 3, **caractérisé en ce que** le changement de polarité de l'organe de mesure (8) et l'élément de détection (9) sont adaptés l'un à l'autre de sorte que la plage de mesure est plus petite de 10 à 20%, en particulier de 10 à 15, que l'intervalle entre deux discontinuités de la courbe caractéristique.

5. Procédé selon l'une des revendications 1 à 3, **caractérisé en ce qu'**une compensation de zéro de la courbe caractéristique détectée est exécutée.

6. Procédé selon la revendication 5, **caractérisé en ce qu'**une compensation de zéro est effectué numériquement en utilisant le seuil décisif d'angle de phase (PWES) défini auparavant, la valeur de la compensation de zéro étant définie par la valeur

PWES + $\tilde{O}$, lors de la présence d'une discontinuité de la courbe caractéristique, dans la plage de mesure, et par le seuil décisif d'angle de phase (PWES) en cas de courbe caractéristique sans discontinuité dans la plage de mesure.

**Fig. 1**

Fig. 2

Fig. 3